(19) Europäisches Patentamt
European Patent Office
Office européen des brevets

(11) **EP 3 190 199 B1**

(12) **EUROPEAN PATENT SPECIFICATION**

(45) Date of publication and mention
of the grant of the patent:
**26.02.2020 Bulletin 2020/09**

(21) Application number: **15837445.4**

(22) Date of filing: **10.08.2015**

(51) Int Cl.:
*C22C 38/00* (2006.01)    *C21D 9/28* (2006.01)
*C22C 38/02* (2006.01)    *C22C 38/04* (2006.01)
*C22C 38/08* (2006.01)    *C22C 38/12* (2006.01)
*C22C 38/14* (2006.01)    *C22C 38/16* (2006.01)
*C23C 8/32* (2006.01)    *C21D 1/06* (2006.01)
*C22C 38/06* (2006.01)    *C22C 38/38* (2006.01)
*C22C 38/42* (2006.01)    *C22C 38/58* (2006.01)
*C22C 38/60* (2006.01)    *C23C 8/80* (2006.01)
*C21D 9/30* (2006.01)

(86) International application number:
**PCT/JP2015/072707**

(87) International publication number:
**WO 2016/035519 (10.03.2016 Gazette 2016/10)**

(54) **NON-TEMPERED SOFT-NITRIDED COMPONENT**

UNGEHÄRTETE WEICHNITRIERTE KOMPONENTE

COMPOSANT NON TREMPÉ NITRURÉ PAR NITRURATION DOUCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2014 JP 2014178001**

(43) Date of publication of application:
**12.07.2017 Bulletin 2017/28**

(73) Proprietor: **Nippon Steel Corporation
Tokyo 100-8071 (JP)**

(72) Inventors:
• **NISHITANI, Shigefumi**
  **Tokyo 100-8071 (JP)**
• **TAKASUGA, Motoki**
  **Tokyo 100-8071 (JP)**
• **HASEGAWA, Tatsuya**
  **Tokyo 100-8071 (JP)**
• **YUYA, Masato**
  **Tokyo 100-8071 (JP)**
• **TAKITANI, Yoshihiro**
  **Wako-shi**
  **Saitama 351-0193 (JP)**

(74) Representative: **J A Kemp LLP
14 South Square
Gray's Inn
London WC1R 5JJ (GB)**

(56) References cited:
WO-A1-2014/136348    JP-A- H0 483 849
JP-A- 2000 160 287    JP-A- 2000 309 846
JP-A- 2008 223 083    JP-A- 2011 042 846
JP-A- 2011 153 364    JP-A- 2012 026 005
US-A1- 2011 186 182

**Description**

TECHNICAL FIELD

The present invention relates to a non-thermal refined nitrocarburized component. Specifically, the present invention relates to a non-thermal refined nitrocarburized component having a high bending fatigue strength and an excellent bending straightening property.

The "non-thermal refined nitrocarburized component" denotes a component subjected to a nitrocarburizing treatment without being subjected to a "quenching-tempering treatment" that is a so-called "thermal refining treatment" after being machined. Hereinafter, the "component subjected to the nitrocarburizing treatment" is referred to simply as a "nitrocarburized component".

BACKGROUND ART

Crankshafts, connecting rods, and the like used in automobiles, industrial machines, and construction machinery, etc. are produced by being subjected to a nitrocarburizing treatment without being subjected to a thermal refining treatment of quenching-tempering after being forged and machined into a desired shape. Particularly, in production of automobile components that require a high fatigue strength and a high wear resistance, treatments, such as an induction hardening treatment and a nitrocarburizing treatment that are a casehardening treatment, are carried out after forging and machining in most cases.

The "nitrocarburizing treatment" performs a cementation treatment on nitrogen and carbon at a temperature of an $A_1$ transformation point or less, and has such major characteristics that have a low heat-treatment temperature and a smaller heat treatment strain than that in the "induction hardening treatment". A "compound layer" (layer formed of precipitated nitride such as $Fe_3N$) observed as a white portion through etching using nital is formed in a surface layer of the component subjected to the nitrocarburizing treatment. A "diffusion layer" is formed between the above compound layer and a base metal (hereinafter referred to as "base material").

The nitrocarburizing treatment causes a small heat treatment strain, but cannot eliminate this strain, and thus brings not a small bad influence on dimensional accuracy. Particularly, even a slight deterioration of dimensional accuracy becomes a crucial matter in a crankshaft or the like that is a rotational shaft component. Hence, it is required to perform bending-straightening after the nitrocarburizing treatment so as to improve the dimensional accuracy.

Unfortunately, cracks may be generated from the surface layer if the nitrocarburized component is subjected to the bending-straightening. Hence, a nitrocarburized component, such as a crankshaft, is required to experience no cracks even if being subjected to bending-straightening, that is, to have an excellent bending straightening property as well as a high bending fatigue strength.

In the following description, the nitrocarburized component may be represented by a crankshaft in some cases.

Because of current demand for consideration to the environments, a crankshaft that is a major component of an engine is also oriented to reduction in weight and size without exclusion, and has been required to have an extremely high bending fatigue strength of 800 MPa or more, for example.

In the light of cost reduction, resource saving, and others, there has been increased demand for a non-thermal refined crankshaft without being subjected to a "quenching-tempering treatment" (thermal refining treatment) during the production thereof.

In order to secure the above bending fatigue strength of 800 MPa or more in a non-thermal refined crankshaft, it is required to set hardness at a position of 0.05 mm from the surface of the component (also referred to as a "surface-layer hardness", hereinafter) to be at least 410 or more in terms of a Vickers hardness (referred to as a "HV hardness", hereinafter) after the nitrocarburizing treatment.

However, in the case of setting the HV hardness at a position of 0.05 mm from the surface of the crankshaft to be 410 or more, cracks are likely to be generated in the surface layer if the bending straightening is performed. Conducting a bending fatigue test on such a crankshaft results in fatigue fractures initiated from the above cracks.

In addition, as described above, there has been increased demand for further reduction in weight of a crankshaft, and thus further more flexibility has been required in crankshaft shape designing. Consequently, steel material for a crankshaft is required to have a bending straightening property high enough for a crankshaft having a shape likely to exhibit a greater bending than that in a conventional art during the nitrocarburizing to be bending-straightened.

Accordingly, there has been extremely strong demand for a crankshaft having a sufficient bending straightening property in addition to a bending fatigue strength as high as 800 MPa or more.

To meet the above demand, for example, JP2002-226939A (Patent Document 1) discloses a "non-thermal refined steel for nitrocarburizing", wherein the steel contains, in mass%, C: 0.2 to 0.6%, Si: 0.05 to 1.0%, Mn: 0.25 to 1.0%, S: 0.03 to 0.2%, Cr: 0.2% or less, s-Al: 0.045% or less, Ti: 0.002 to 0.010%, N: 0.005 to 0.025%, and O: 0.001 to 0.005%, and further contains one or more types of elements selected from Pb: 0.01 to 0.40%, Ca: 0.0005 to 0.0050%, and Bi: 0.005 to 0.40% if necessary, satisfies conditions: $0.12 \times Ti\% < O\% < 2.5 \times Ti\%$, and $0.04 \times N\% < O\% < 0.7 \times N\%$, and includes a balance made of Fe and unavoidable impurities, wherein a micro-structure after hot forging is a mixed structure of ferrite and perlite.

JP2007-177309A (Patent Document 2) discloses a crankshaft made of a steel whose surface is subjected to a nitriding treatment or a nitrocarburizing treatment, the crankshaft including a pin section and a journal section. The steel contains, as an alloy element, C: 0.07 mass% or more to 0.12 mass% or less, Si: 0.05 mass% or more to 0.25 mass% or less, Mn: 0.1 mass% or more to 0.5 mass% or less, Cu: 0.8 mass% or more to 1.5 mass% or less, Ni: 2.4 mass% or more to 4.5 mass% or less, Al: 0.8 mass% or more to 1.5 mass% or less, Ti: 0.5 mass% or more to 1.5 mass% or less, and further contains one or more types of elements selected from S: 0.01 mass% or more to 0.10 mass%, Ca: 0.0010 mass% or more to 0.0050 mass% if necessary, and includes a balance made of Fe and unavoidable impurities. For the crankshaft, each steel specimen taken from a center part of the steel that is affected by no influence of the nitriding treatment is subjected to a solid solution treatment at 1200°C for one hour, and thereafter, is cooled at an appropriate cooling speed of 0.3°C/seconds or more to 1.5°C/seconds or less within a temperature range from 900°C or more to 300°C or less, thereby setting a ratio of bainite in the steel micro-structure to be 80% or more, and setting the HV hardness to be 200 or more to 300 or less; each internal hardness of the pin section and the journal section that are subjected to the nitriding treatment or the nitrocarburizing treatment is set to be 350 or more to 500 or less in terms of the HV hardness; and the HV hardness at a position of 0.05 mm from the surface is 650 or more to 950 or less.

In JP2012-26005A (Patent Document 3), the present inventors have proposed a "non-thermal refined nitrided crankshaft" wherein a steel material of a base metal contains, in mass%, C: 0.25 to 0.60%, Si: 0.10 to 1.0%, Mn: 0.60 to 2.0%, P: 0.08% or less, S: 0.10% or less, Al: 0.05% or less, Cr: 0.20 to 1.0%, and N: 0.0030 to 0.0250%, includes a balance made of Fe and impurities, and satisfies $40 - C + 2Mn + 5.5Cr \geq 43.0$; and the HV hardness at a depth of 0.05 mm from the surface is 380 to 600, and at least each of a pin fillet section, a journal fillet section, and a pin section has a compound-layer depth of 5 µm or less.

This non-thermal refined nitrided crankshaft may further contain one or more types of elements selected from Cu, Ni, Mo, V, Ti, and Ca, and in this case, it is necessary to satisfy $[40-C+2Mn+5.5Cr+26Mo \geq 43.0]$.

In JP2011-42846A (Patent Document 4), the present inventors have further proposed a "thermal refined nitrocarburized component", wherein a steel material of a base metal contains, in mass%, C: 0.25 to 0.40%, Si: 0.10 to 0.35%, Mn: 0.60 to 1.0%, P: 0.08% or less, S: 0.10% or less, Al: 0.05% or less, Cr: 0.30 to 1.10%, and N: 0.0030 to 0.0250%, and includes a balance made of Fe and impurities; and the HV hardness at a position of 0.05 mm from the surface is 400 to 600, and a compound-layer depth at a stress concentrated region is 5 µm or less.

The thermal refined nitrided component may further contain one or more types of elements selected from Cu, Mo, V, Ni, and Ti.


LIST OF PRIOR ART DOCUMENTS

PATENT DOCUMENT

Patent Document 1: JP2002-226939A
Patent Document 2: JP2007-177309A
Patent Document 3: JP2012-26005A
Patent Document 4: JP2011-42846A


DISCLOSURE OF THE INVENTION

PROBLEMS TO BE SOLVED BY THE INVENTION

With the chemical composition described in Patent Document 1, it is not possible to attain a sufficient surface-layer hardness. Hence, the bending fatigue strength is too low to reach 800 MPa, as shown in an example of Patent Document 1.

With the chemical composition described in Patent Document 2, the surface-layer hardness after the nitrocarburizing treatment becomes too high, as shown in an embodiment thereof. Hence, it is hard to tell that a sufficient bending straightening property is secured during performing the bending straightening treatment.

With the chemical composition described in Patent Document 3, it is possible to attain a high fatigue strength and a high bending straightening property, as shown in an embodiment thereof. However, a crankshaft has been oriented to reduction in weight and size, and requires more severe fatigue strength and bending straightening property.

The thermal refined nitrocarburized component disclosed in Patent Document 4 is excellent in bending straightening property after the nitrocarburizing treatment, and has a bending fatigue strength as high as 800 MPa or more in the bending fatigue test. Accordingly, this component is usable as a component, such as a crankshaft, in automobiles, industrial machines, and construction machinery, for example, and contributes to reduction in weight and size. Unfortunately, in the invention of Patent Document 4, subsequent to the machining, a thermal refining treatment of quenching and tempering is required before the nitrocarburizing treatment.

An object of the present invention, which has been made in order to solve the problems above, is to provide a non-thermal refined nitrocarburized component excellent in bending straightening property, and having a fatigue strength as high as 800 MPa or more in the bending fatigue test.

MEANS FOR SOLVING THE PROBLEMS

In order to solve the aforementioned problems, the present inventors have conducted various studies. As a result, the following points 1) to 7) were found.

1) A thin sheet specimen was collected from a surface layer of each steel material subjected to the nitrocarburizing treatment, and a tension test was conducted on each specimen; and as a result, specimens whose compound layers were removed exhibited greatly enhanced tension in the tension test, compared with that of specimens whose compound layers were not removed.

2) As a result of observation on a fracture surface of each thin sheet specimen after the tension test, the specimens whose compound layers were not removed had fracture surfaces where brittle fractures were generated in the compound layers, thus initiating cracking; contrary to this, the specimens whose compound layers were removed had ductility fracture surfaces.

3) If the compound layer in the surface layer of the steel material subjected to the nitrocarburizing treatment is removed, the fracture morphology during the bending-straightening is changed from the brittle fractures starting from the compound layer to the ductility fractures. Accordingly, it is possible to enhance the bending straightening property of the nitrocarburized component.

4) Meanwhile, in the bending fatigue strength, there is little difference between before and after the removal of the compound layer. In the case of the non-thermal refined nitrocarburized component, if the hardness at a position of 0.05 mm from the component surface is 410 or more in terms of the HV hardness, and if the hardness at a position of 1.0 mm from the component surface (hereinafter, also referred to as "internal hardness") is 200 or more in terms of the HV hardness, and the metal micro-structure of the base metal (hereinafter, also referred to as "base material micro-structure") is bainite micro-structure, it is possible to stably attain a high bending fatigue strength of 800 MPa or more.

5) In the non-thermal refined component, an endurance ratio (fatigue strength/tensile strength) of the base metal is lower than that in the thermal refined component. Therefore, the non-thermal refined component has a lower fatigue strength of the base metal than that of the thermal refined component even if the non-thermal refined component has an internal hardness equivalent to that of the thermal refined component. In particular, when the internal hardness of the non-thermal refined nitrocarburized component is as low as less than 200 in terms of the HV hardness and the base material micro-structure is dominantly made up of a mixed structure of ferrite and pearlite (hereinafter, referred to as a "ferrite-pearlite micro-structure"), even if the surface-layer hardness is as high as 410 or more in terms of the HV hardness, a fracture initiated from an internal part may take place during the fatigue test, which makes it hard to attain a fatigue strength as high as 800 MPa or more.

6) It is possible to substantially secure a sufficient bending straightening property by removing the compound layer in the surface layer of the nitrocarburized component even if the surface-layer hardness after the nitrocarburizing treatment is 410 or more in terms of the HV hardness.

7) However, in the case of a crankshaft shape that requires a high bending straightening property, if the surface-layer hardness of the nitrocarburized component becomes more than 480 in terms of the HV hardness, it may be hard to attain a sufficient bending straightening property even if the compound layer is removed.

The present invention has been accomplished based on the above findings, and the gist lies in a non-thermal refined nitrocarburized component according to the appended claims.

The term "impurities" denotes those impurities which come from ores and scraps as row materials, manufacturing environments, and so on during industrially producing steel materials.

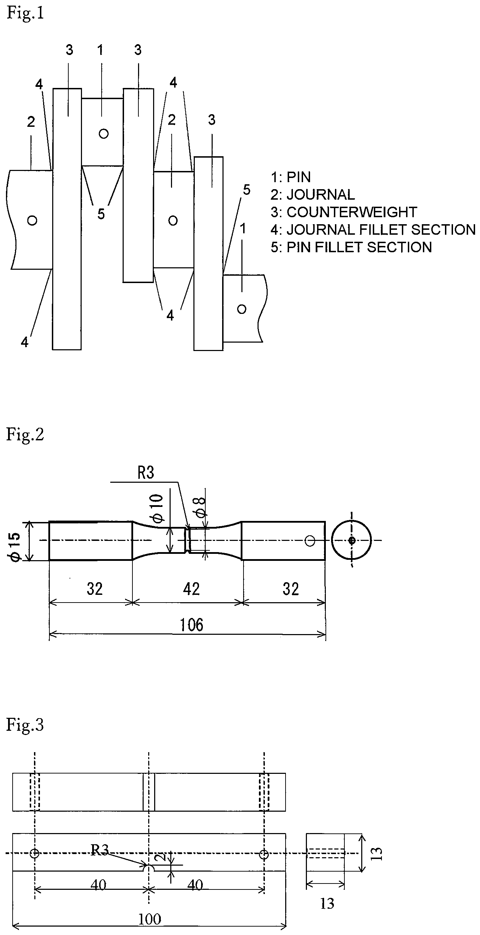

The "stress concentrated region" denotes a region where fatigue fractures are generated due to bending or cracking is caused while carrying out the bending straightening. As a specific example thereof, if the "non-thermal refined nitrocarburized component" is a crankshaft having a shape as shown in Figure 1, the "stress concentrated region" represents a "pin fillet section" or a "journal fillet section" of the crankshaft.

ADVANTAGEOUS EFFECTS OF THE INVENTION

The non-thermal refined nitrocarburized component of the present invention is excellent in bending straightening property after the nitrocarburizing treatment, and has a bending fatigue strength as high as 800 MPa or more in the bending fatigue test; therefore, this non-thermal refined nitrocarburized component is usable as a component, such as a crankshaft, in automobiles, industrial machines, and construction machinery, and is capable of realizing reduction in weight and size of components used threrein.

BRIEF DESCRIPTION OF THE DRAWINGS

[Figure 1] Figure 1 is a drawing exemplifying a part of a crankshaft as a non-thermal refined nitrocarburized component, and explaining a "pin fillet section" and a "journal fillet section" equivalent to a "stress concentrated region" of the crankshaft.
[Figure 2] Figure 2 is a drawing showing a shape of a grooved Ono-type rotating bending fatigue test specimen used in Example; and a unit of measurement in the drawing is "mm".
[Figure 3] Figure 3 is a drawing showing a shape of a four-point bending test specimen used in Example; and a unit of measurement in the drawing is "mm".
[Figure 4] Figure 4 is a drawing showing a target surface to be examined of a four-point bending test specimen used in Examples.
[Figure 5] Figure 5 is a drawing schematically showing measurement positions of hardness in the Vickers hardness test in a four-point bending test specimen used in Examples.
[Figure 6] Figure 6 is a drawing schematically showing measurement positions of compound-layer depth in a four-point bending test specimen used in Examples.

MODE FOR CARRYING OUT THE INVENTION

Each requirement of the present invention will be described in detail, hereinafter. It should be noted that "%" for a content of each element denotes "mass%".

(A) Chemical composition of steel material of base metal:

C: 0.35 to 0.50%

C has an action to improve the internal hardness, and enhance the bending fatigue strength. The C content is required to be 0.35% or more in order to attain a desired bending fatigue strength. However, an excessive C content results in an excessively high surface-layer hardness, so that it is hard to attain a sufficient bending straightening property even if the compound-layer depth at the stress concentrated region is 5 $\mu$m or less. Hence, the C content is set to be 0.35 to 0.50%. The C content is preferably 0.38% or more, and preferably 0.45% or less.

Si: 0.10 to 0.35%

Si is an element necessary for deoxidation during melting the steel, and the Si content of at least 0.10% is required for obtaining the above effect. However, an excessive content of Si causes excessive deterioration of the bending straightening property even if the compound-layer depth at the stress concentrated region is 5 $\mu$m or less. Hence, the Si content is set to be 0.10 to 0.35%. The Si content is preferably 0.15% or more, and preferably 0.30% or less.

Mn: 2.3 to 2.8%

Mn is an element having a deoxidizing action similar to Si. Mn also has an action to increase a solute nitrogen content in the surface layer during the nitrocarburizing to improve the surface-layer hardness, thereby enhancing the bending fatigue strength. In order to exert this effect, the Mn content is required to be 2.3% or more. On the other hand, the Mn content of more than 2.8% causes an excessively high surface-layer hardness, which excessively deteriorates the bending straightening property even if the compound-layer depth at the stress concentrated region is 5 $\mu$m or less. Accordingly, the Mn content is set to be 2.3 to 2.8%. The Mn content is preferably 2.4% or more, and preferably 2.7% or less.

S: 0.10% or less

An effect to improve machinability can be attained by actively containing S. However, the S content of more than 0.10% significantly deteriorates the bending fatigue strength and the bending straightening property. Accordingly, the S content is set to be 0.10% or less. It is preferable to set the S content to be 0.08% or less. In order to attain the effect to improve machinability, it is preferable to set the S content to be 0.04% or more.

N: 0.0030 to 0.0250%

N is an element to improve the bending fatigue strength and the bending straightening property. In order to attain this effect, the N content is required to be 0.0030% or more. On the other hand, the N content of more than 0.0250% rather saturates this effect. Accordingly, the N content is set to be 0.0030 to 0.0250%. The N content is preferably 0.0080% or more, and preferably 0.0220% or less.

Cu: 0 to 1.0%

Cu is an element to improve the internal hardness, and enhance the bending fatigue strength. Hence, Cu may be contained as needed. However, the Cu content of more than 1.0% deteriorates hot workability. Accordingly, the amount of Cu to be contained is set to be 1.0% or less. The amount of Cu is preferably 0.4% or less, and more preferably 0.3% or less.
In order to stably attain the above effect, it is preferable to set the amount of Cu to be 0.05% or more, and more preferably 0.1% or more.

Mo: 0 to 0.3%

Mo has an action to strengthen ferrite, and improve the internal hardness to enhance the bending fatigue strength. Hence, Mo may be contained as needed. However, an excessive Mo content of more than 0.3% rather saturates the above effect, only to deteriorate economic efficiency. Accordingly, the amount of Mo to be contained is set to be 0.3% or less. The amount of Mo is preferably 0.2% or less.
In order to stably attain the above effect, the amount of Mo is preferably 0.05% or more, and more preferably 0.1% or more.
Any one type selected from Cu and Mo, or two types selected from Cu and Mo in combination may be contained. The total content when these elements are contained in combination may be 1.3%, and preferably 0.3% or less.

Ni: 0 to 0.5%

Ni is an element to improve toughness, and enhance the bending straightening property. Accordingly, Ni may be contained as needed. However, the Ni content of more than 0.5% rather saturates the above effect, only to deteriorate the economic efficiency. Hence, the amount of Ni to be contained is set to be 0.5% or less. The amount of Ni is preferably 0.3% or less, and more preferably 0.2% or less.
In order to stably attain the above effect, the amount of Ni is preferably 0.05% or more, and more preferably 0.08% or more.
In the case of containing Cu, it is likely to cause hot cracking called "Cu checking", and in order to prevent this, it is preferable to contain Cu in combination with Ni in a manner as to satisfy $Ni/Cu \geq 0.5$.

Ti: 0 to 0.020%

Ti is an element that forms nitride, and refines grains to hinder propagation of cracking during the bending-straightening, thereby enhancing the bending straightening property. Accordingly, Ti may be contained as needed. However, the Ti content of more than 0.020% generates coarse nitride, and significantly deteriorates the bending straightening property even if the compound-layer depth at the stress concentrated region is 5 $\mu$m or less. Accordingly, the amount of Ti to be contained is set to be 0.020% or less. The amount of Ti is preferably 0.015% or less.
In order to stably attain the above effect, the amount of Ti is preferably 0.005% or more.
Any one type selected from Ni and Ti, or two types selected from Ni and Ti in combination may be contained. The total content when these elements are contained in combination may be 0.520%, and preferably 0.30% or less.

Fn1: within range of 3.10 to 6.00

In the non-thermal refined nitrocarburized component according to the present invention, Fn1 represented by the below described Formula [1] is within a range of 3.10 to 6.00:

$$\text{Fn1} = (0.316C + 0.122) \times (0.7Si + 1) \times (5.1Mn - 1.12) \times (0.364Ni + 1) \times$$

$$(2.16Cr + 1) \times (3Mo + 1) \text{ ...[1]},$$

where an symbol of an element in Formula [1] indicates a content of the element in steel in mass%.

Fn1 is an index relating to the base material micro-structure. Any of C, Si, Mn, Ni, Cr, and Mo improves hardenability of steel. If Fn1 is 3.10 or more, the hardenability of steel material becomes sufficiently high, and the base material micro-structure becomes a bainite micro-structure, which allows to impart a high endurance ratio to the base material. However, if Fn1 becomes more than 6.00, the base material micro-structure becomes a martensite micro-structure, and the hardness becomes excessively high, thus adversely affecting the bending straightening property. Hence, Fn1 is set to be $3.10 \leq \text{Fn1} \leq 6.00$. Fn1 is preferably 3.50 or more, and is also preferably 5.00 or less.

The non-thermal refined nitrocarburized component according to the present invention includes a steel material of a base metal having a chemical composition consisting of each element described above, with the balance being Fe and impurities, where the impurities include P: 0.08% or less; Al: 0.05% or less; and Cr: less than 0.20%.

P: 0.08% or less

P is an impurity contained in the steel, and deteriorates the bending fatigue strength. Particularly, the P content of more than 0.08% significantly deteriorates the bending fatigue strength. Accordingly, the P content is set to be 0.08% or less. It is preferable to set the P content to be 0.04% or less.

Al: 0.05% or less

Al is an impurity contained in the steel. An excessive Al content deteriorates the bending straightening property. Particularly, the S content of more than 0.05% significantly deteriorates the bending straightening property even if the compound-layer depth at the stress concentrated region is 5 $\mu$m or less. Accordingly, the Al content is set to be 0.05% or less. The Al content is preferably 0.03% or less.

Cr: less than 0.20%

Cr is an impurity contained in the steel. Containing Cr may excessively increase the surface-layer hardness, which deteriorates the bending straightening property; thus it is preferable to set the Cr content to be as small as possible. Accordingly, the Cr content is set to be less than 0.20%. The Cr content is preferably 0.10% or less.

(B) Hardness, compound-layer depth, and micro-structure:

In the non-thermal refined nitrocarburized component according to the present invention, (1) at a stress concentrated region, the HV hardness at a position of 0.05 mm from a surface, that is, the HV hardness in a surface layer is 410 to 480; the HV hardness at a position of 1.0 mm from the surface, that is, the HV hardness at an internal part is 200 or more; the compound-layer depth is 5$\mu$m or less, and (2) the metal micro-structure of the base metal is a bainite micro-structure.

(B-1) Surface-layer hardness at steel concentrated region

In order to attain a fatigue strength as high as 800 MPa or more, it is necessary that the HV hardness in the surface layer at a stress concentrated region is 410 or more. On the other hand, if the HV hardness in the surface layer at the stress concentrated region is more than 480, in the case of using a crankshaft shape to likely cause a greater bending than that of a conventional art during the nitrocarburizing, it may be hard to attain a practically sufficient bending straightening property even if the compound-layer depth at the stress concentrated region is 5 $\mu$m or less.

Accordingly, in the non-thermal refined nitrocarburized component according to the present invention, the HV hardness at a position of 0.05 mm from the surface at the stress concentrated region is set to be 410 to 480. The HV hardness at a position of 0.05 mm from the surface at the stress concentrated region is preferably 420 or more, and preferably 470 or less.

(B-2) Internal hardness at the stress concentrated region:

In the non-thermal refined nitrocarburized component, since the endurance ratio of the base metal is lower than that in the thermal refined nitrocarburized component, at the stress concentrated region, the fatigue strength of the base metal becomes lower than that in the thermal refined nitrocarburized component even if the non-thermal refined nitrocarburized component has an internal hardness equivalent to that of the thermal refined nitrocarburized component. Consequently, in the non-thermal refined nitrocarburized component, at the stress concentrated region, in the case of having an HV hardness of less than 200 at the internal part, even if the non-thermal refined nitrocarburized component has an internal hardness equivalent to that of the thermal refined nitrocarburized component, and also has a surface-layer hardness as high as 410 or more in terms of the HV hardness, fatigue fractures initiated from the internal part may be caused, which makes it hard to attain a high fatigue strength of 800 MPa or more.

Accordingly, in the non-thermal refined nitrocarburized component according to the present invention, the HV hardness at a position of 1.0 mm from the surface at the stress concentrated region is set to be 200 or more. The HV hardness at a position of 1.0 mm from the surface at the stress concentrated region is preferably 210 or more, and preferably 320 or less in the light of machinability.

(B-3) Compound-layer depth at the stress concentrated region:

By setting the compound-layer depth at the stress concentrated region to be thinner, it is possible to improve the bending straightening property without deteriorating the bending fatigue strength. However, it is hard to expect significant improvement of the bending straightening property if the compound layer whose depth is more than 5 $\mu$m still remains.

Accordingly, in the non-thermal refined nitrocarburized component according to the present invention, the compound-layer depth at the stress concentrated region is set to be 5 $\mu$m or less. The compound-layer depth at the stress concentrated region is preferably 3 $\mu$m or less, and it is most preferable to have no compound layer, that is, have a compound-layer depth of 0 $\mu$m.

(B-4) Metal micro-structure of base metal:

As described above, the metal micro-structure (base material micro-structure) of the base metal of the non-thermal refined nitrocarburized component according to the present invention, which has a steel material of a base metal having the chemical composition described in the above section (A), is a bainite micro-structure. The bainite micro-structure as used herein refers to a metal micro-structure of the base metal of which 80% or more is bainite micro-structure.

As described above, since a non-thermal refined nitrocarburized component has a lower endurance ratio of the base material compared with a thermal refined nitrocarburized component, even if it has an internal hardness equal to that of the thermal refined nitrocarburized component at a stress concentrated region, the fatigue strength of the base material will become lower than that of a thermal refined nitrocarburized component. However, when the base material micro-structure of the non-thermal refined nitrocarburized component is a bainite micro-structure, the endurance ratio of the base material becomes higher compared with a case in which the base material micro-structure is a ferrite-pearlite micro-structure. Hence, a bainite type non-thermal refined steel can attain a higher fatigue strength compared with a ferrite-pearlite type non-thermal refined steel which has the same internal hardness at a stress concentrated region.

A component which satisfies the above described conditions (B-1) to (B-4) can be obtained in such a manner that a steel material that satisfies the chemical composition specified by the present invention is hot-forged at a temperature of 1000°C or more into a hot forged product having a shaft diameter of 8 to 80 mm; then after being allowed to cool and machined, the product is subjected to a nitrocarburizing treatment by being retained for two hours in an atmosphere where an RX gas and ammonia gas are mixed at a mixture ratio of 1:1 at a temperature of 600°C, and then cooled in an oil having a temperature of 90°C; and subsequently the stress concentrated region thereof is ground through machining such as lapping.

The above mentioned "RX gas" is one type of a modified gas, and represents a brand name of this gas.

Specifically, representing a crankshaft as an example of the non-thermal refined nitrocarburized component, for example, this crankshaft can be obtained in such a manner that a starting material that satisfies conditions on the chemical composition specified by the present invention is hot-forged into a crankshaft, this crankshaft is machined, and thereafter this crankshaft is subjected to the nitrocarburizing treatment to retain the crankshaft for two hours in an atmosphere where an RX gas and an ammonia gas are mixed at a mixture ratio of 1:1 at a temperature of 600°C, and then cooled in an oil having a temperature of 90°C, and subsequently, the pin fillet section and the journal fillet section are ground through machining using a lapping machine or the like.

Hereinafter, although the present invention will be described in detail by way of Examples, the present invention will not be limited to those Examples.

EXAMPLE

Each of Steels A to N having respective chemical compositions shown in Table 1 was melt in a 70t converter, subjected to continuous casting, and further subjected to blooming into a cast piece having a cross sectional dimension of 180 mm×180 mm.

Subsequently, each cast piece was hot-forged under the conditions that a heating temperature was 1200°C, and a finishing temperature was 1000 to 1050°C into a steel bar having a diameter of 90 mm. Each steel bar after the hot-forging was cooled in the atmosphere down to a room temperature through allowing cooling.

In Table 1, each of Steels A to H is a steel having chemical composition within the range specified by the present invention, and each of Steels I to N is a steel having chemical composition out of the range specified by the present invention.

[Table 1]

Table 1

| Steel | Chemical composition (mass%) Balance: Fe and impurities | | | | | | | | | | | | |
|---|---|---|---|---|---|---|---|---|---|---|---|---|---|
| | C | Si | Mn | S | N | Cu | Mo | Ni | Ti | P | Al | Cr | Fn1 |
| A | 0.36 | 0.21 | 2.72 | 0.070 | 0.0135 | - | - | - | - | 0.017 | 0.007 | 0.04 | 3.75 |
| B | 0.48 | 0.14 | 2.42 | 0.042 | 0.0170 | - | - | - | - | 0.020 | 0.022 | 0.09 | 4.03 |
| C | 0.41 | 0.32 | 2.32 | 0.066 | 0.0180 | - | - | - | - | 0.018 | 0.014 | 0.14 | 4.30 |
| D | 0.43 | 0.20 | 2.48 | 0.062 | 0.0175 | - | - | - | 0.012 | 0.018 | 0.012 | 0.06 | 3.83 |
| E | 0.40 | 0.15 | 2.44 | 0.075 | 0.0150 | 0.20 | - | - | - | 0.010 | 0.011 | 0.10 | 3.78 |
| F | 0.41 | 0.22 | 2.42 | 0.066 | 0.0160 | - | - | 0.10 | - | 0.016 | 0.010 | 0.09 | 4.03 |
| G | 0.37 | 0.17 | 2.40 | 0.050 | 0.0165 | 0.19 | - | 0.09 | - | 0.011 | 0.014 | 0.11 | 3.80 |
| H | 0.36 | 0.15 | 2.35 | 0.055 | 0.0180 | - | 0.11 | - | - | 0.022 | 0.010 | 0.04 | 4.09 |
| I | *0.19 | 0.11 | 2.50 | 0.065 | 0.0185 | - | - | - | - | 0.010 | 0.011 | 0.19 | 3.22 |
| J | 0.37 | 0.20 | *2.25 | 0.068 | 0.0170 | - | - | - | - | 0.015 | 0.012 | 0.13 | 3.61 |
| K | 0.36 | 0.18 | *3.10 | 0.060 | 0.0175 | - | - | - | - | 0.014 | 0.020 | 0.10 | 4.74 |
| L | 0.36 | 0.22 | 2.45 | 0.060 | 0.0190 | - | - | - | - | 0.012 | 0.015 | *0.28 | 4.97 |
| M | 0.36 | 0.14 | 2.30 | 0.066 | 0.0185 | - | - | - | - | 0.021 | 0.015 | 0.03 | *2.92 |
| N | 0.49 | 0.30 | 2.77 | 0.062 | 0.0175 | - | - | - | - | 0.018 | 0.018 | 0.18 | *6.05 |

Fn1=(0.316C+0.122)×(0.7Si+1)×(5.1Mn-1.12)×(0.364Ni+1)×(2.16Cr+1)×(3Mo+1)

A mark (*) represents deviation from the chemical composition specified by the present invention.

Each steel bar having a diameter of 90 mm obtained in this manner was heated up to a temperature of 1200°C, and then hot-forged at a finishing temperature of 1000 to 1050°C into a steel bar having a diameter of 50 mm. Each finished steel bar was cooled down to a room temperature through allowing cooling in the atmosphere.

In each of Steels A to N, a grooved Ono-type rotating bending fatigue test specimen having a shape shown in Figure 2 was cut out in parallel to the forging axis from an D/4 part ("D" represents a diameter of a steel bar) of each steel bar as hot-forged having a diameter of 50 mm, and a four-point bending test specimen having a shape shown in Figure 3 was also cut out in the same manner as this grooved Ono-type rotating bending fatigue test specimen.

In the test specimen in Figure 2, the groove bottom of the R3 is equivalent to the stress concentrated region. Similarly, in the test specimen in Figure 3, the notch bottom of the R3 is equivalent to the stress concentrated region.

Each grooved Ono-type rotating bending fatigue test specimen and each four-point bending test specimen, which were obtained in the above manner, were respectively subjected to the nitrocarburizing treatment to retain each test specimen for two hours in an atmosphere where the RX gas and the ammonia gas are mixed at a mixture ratio of 1:1 at a temperature of 600°C; and thereafter, was cooled in the oil having a temperature of 90°C.

In Test No. 1 to Test No. 14, subsequent to the nitrocarburizing treatment, electrolytic grinding was further carried out at the groove bottom of each grooved Ono-type rotating bending fatigue test specimen, and at the notch bottom of each four-point bending test specimen, with a target grinding depth of 0.03 mm under the following conditions.

- Electrolytic solution: perchloric acid ($HClO_4$): acetic acid ($CH_3COOH$) = 1:9
- Current value: 0.14A
- Grinding area:

    Ono-type rotating bending fatigue test specimen: 160 mm$^2$
    Four-point bending test specimen: 96 mm$^2$

- Grinding time period:

    Ono-type rotating bending fatigue test specimen: 970 seconds
    Four-point bending test specimen: 590 seconds

In Test No. 15 and Test No. 16, subsequent to the nitrocarburizing treatment, electrolytic grinding was further carried out at the groove bottom of each grooved Ono-type rotating bending fatigue test specimen, and the notch bottom of each four-point bending test specimen, with a target grinding depth of 0.015 mm under the following conditions.

- Electrolytic solution: perchloric acid ($HClO_4$): acetic acid ($CH_3COOH$) = 1:9
- Current value: 0.14A
- Grinding area:

    Ono-type rotating bending fatigue test specimen: 160 mm$^2$
    Four-point bending test specimen: 96 mm$^2$

- Grinding time period:

    Ono-type rotating bending fatigue test specimen: 490 seconds
    Four-point bending test specimen: 300 seconds

Using the specimens as nitrocarburized (Test No. 17) and the specimens further subjected to the electrolytic grinding after the nitrocarburizing treatment (Test No. 1 to Test No. 16) obtained in the above manner, a study of the bending fatigue strength by the Ono-type rotating bending fatigue test, and a study of the bending straightening property by the four-point bending test were respectively carried out.

Further, using the Ono-type rotating bending fatigue test specimens and the four-point bending test specimens, which were as nitrocarburized (Test No. 17) or subjected to electrolytic grinding after the nitrocarburizing treatment (Test No. 1 to Test No. 16), the surface-layer hardness (i.e., hardness at a position of 0.05 mm from the surface of each specimen), the internal hardness (i.e., hardness at a position of 1.0 mm from the surface of each specimen), and the compound-layer depth at the groove bottom and the notch bottom, which were stress-concentrated regions, were studied. Further, the base material micro-structure was studied as well.

The details of each study will be described, hereinafter.

(1) Study of bending fatigue strength:

The Ono-type rotating bending fatigue test was carried out at a room temperature, in the atmosphere, under completely reversed bending at a rotational rate of 3000 rpm so as to study the bending fatigue strength (referred to as "σw", hereinafter).

The target σw was set to be 800 MPa or more.

(2) Study of bending straightening property:

A strain gauge of 2 mm was adhesively bonded to the notch bottom of each four-point bending test specimen, and bending-straightening strain was applied to this specimen until the gauge was broken. A read value of the gauge at the moment when the gauge was broken was evaluated as the bending straightening property.

The target value of the bending straightening property was set to be 22000 μ (equivalent to the bending-straightening strain of 2.2%) or more.

(3) Surface-layer hardness and internal hardness at stress concentrated region

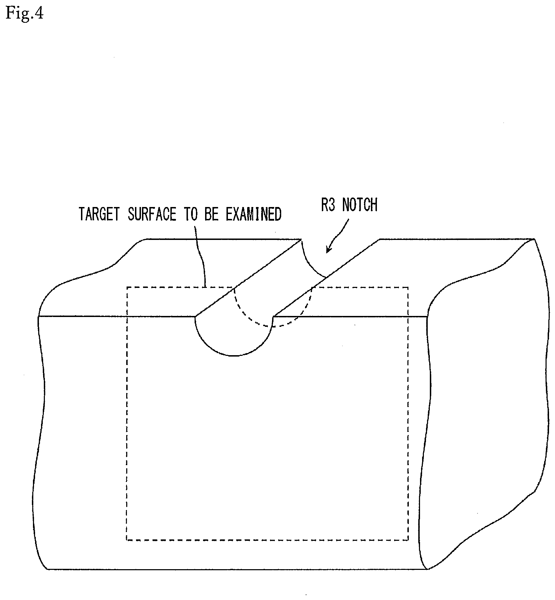

The Ono-type rotating bending fatigue test specimen was cut such that a cross section that passes through the central portion of the specimen and is parallel with the longitudinal direction of the specimen appears. Further, the four-point bending test specimen was cut such that a cross section that is parallel with the longitudinal direction of the specimen and is perpendicular to the direction of the groove appears. Then, to employ each cut surface as a target surface to be examined, after the vicinity of the groove of the R3 of the Ono-type rotating bending fatigue test specimen and the vicinity of the notch of the R3 of the four-point bending test specimen were embedded in resin, the aforementioned surface was polished to be mirror-finished; and subsequently the surface-layer hardness at the stress concentrated region (hereinafter, simply referred to as the "surface-layer hardness) and the internal hardness at the stress concentrated region (hereinafter, simply referred to as the "internal hardness") were studied using a Vickers hardness meter. The target surface to be examined of the four-point bending test specimen is shown in Figure 4. The target surface to be examined is similar for the case of the Ono-type rotating bending fatigue test specimen (not shown).

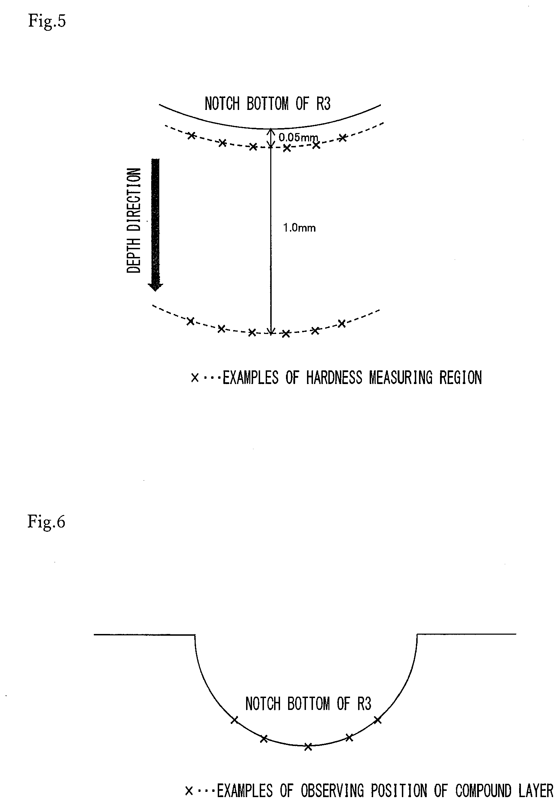

As for hardness, in conformity to the "Vickers hardness test - Test method" described in JIS Z 2244:2009, the HV hardness at any six points respectively at a position of 0.05 mm and a position of 1.0 mm from the groove bottom of the R3 and the notch bottom of the R3 were measured with a test force of 2.94N using a Vickers hardness meter, and the measured values were arithmetically averaged to evaluate the surface-layer hardness and the internal hardness. Figure 5 schematically shows the measurement positions of hardness in the four-point bending test specimen. The measurement positions are similar for the target surface to be examined of the Ono-type rotating bending fatigue test specimen (not shown).

(4) Compound-layer depth at the stress concentrated region:

The compound-layer depth at the stress concentrated region (hereinafter, simply referred to as "compound-layer depth") was studied using each of the test specimens embedded in the resin that were used in the above (3).

Specifically, each test specimen embedded in the resin was polished once again, etched with nital, and then any five visual fields at the groove bottom of the R3 and any five visual fields at the notch bottom of the R3 were respectively observed with an optical microscope with magnification of 400×; and portions observed to be white were determined as the "compound layers", and the depths of these layers were measured, and arithmetically averaged as the compound-layer depth. The measurement positions of the compound-layer depth in the four-point bending test specimen are schematically shown in Figure 6. The measurement positions are similar for the target surface to be examined of the Ono-type rotating bending fatigue test specimen (not shown).

(5) Base material micro-structure:

The base material micro-structure was studied using each of the test specimens embedded in resin that were used in the studies described in (3).

Specifically, the base material micro-structure was observed by an optical microscope at a magnification of 400 times by using a test specimen which was etched with nital as described above.

Table 2 shows, in summary, results of each study described above. In Table 2, in a base material micro-structure described as "bainite", a bainite micro-structure accounts for 80 % or more of the base material micro-structure; in one described as "ferrite-pearlite", a ferrite-pearlite micro-structure accounts for 80% or more of it, and in one described as "martensite", a martensite micro-structure accounts for 80% or more of it.

[Table 2]

Table 2

| Test No. | Steel | Grooved Ono-type rotating bending fatigue test specimen | | | | | Four-point bending test specimen | | | | |
|---|---|---|---|---|---|---|---|---|---|---|---|
| | | Compound Layer depth (μm) | Surface Layer hardness (HV hardness) | Internal hardness (HV hardness) | base material micro-structure | σw (MPa) | Compound Layer Depth (μm) | Surface Layer hardness (HV hardness) | Internal hardness (HV hardness) | base material micro-structure | Bending Straightening property (μ) |
| 1 | A | 2 | 433 | 244 | bainite | 840 | 2 | 431 | 243 | bainite | 29800 |
| 2 | B | 1 | 435 | 260 | bainite | 880 | 1 | 434 | 261 | bainite | 29500 |
| 3 | C | 3 | 415 | 235 | bainite | 810 | 3 | 416 | 234 | bainite | 27200 |
| 4 | D | 0 | 440 | 265 | bainite | 890 | 0 | 436 | 264 | bainite | 30200 |
| 5 | E | 2 | 445 | 270 | bainite | 880 | 2 | 444 | 271 | bainite | 26000 |
| 6 | F | 3 | 461 | 280 | bainite | 900 | 3 | 465 | 280 | bainite | 24500 |
| 7 | G | 0 | 451 | 290 | bainite | 880 | 0 | 452 | 291 | bainite | 27000 |
| 8 | H | 1 | 440 | 235 | bainite | 860 | 1 | 440 | 233 | bainite | 28000 |
| 9 | *I | 1 | 435 | *195 | bainite | #780 | 1 | 433 | *198 | bainite | 29500 |
| 10 | *J | 0 | *405 | 240 | bainite | #790 | 0 | *406 | 242 | bainite | 33500 |
| 11 | *K | 2 | *510 | 285 | bainite | 920 | 3 | *512 | 282 | bainite | #16500 |
| 12 | *L | 2 | *505 | 275 | bainite | 900 | 2 | *505 | 277 | bainite | #16000 |
| 13 | *M | 2 | 412 | 210 | * ferrite-pearlite | #770 | 1 | 413 | 210 | *ferrite-pearlite | 32400 |
| 14 | *N | 1 | *540 | 295 | * martensite | 920 | 1 | *542 | 299 | *martensite | #13500 |
| 15 | A | *11 | 440 | 245 | bainite | 840 | *12 | 441 | 244 | bainite | #14000 |
| 16 | B | *10 | 445 | 260 | bainite | 870 | *9 | 444 | 260 | bainite | #13500 |
| 17 | C | *21 | 425 | 238 | bainite | 810 | *20 | 428 | 235 | bainite | #15000 |

A mark (*) represents deviation from the requirement specified by the present invention.
A mark (#) represents that the value does not satisfy the target value.

As shown in Table 2, in the cases of Test No. 1 to Test No. 8 that satisfy the conditions specified by the present invention in the chemical composition of the steel material of the base metal, the surface-layer hardness, the internal hardness, and the compound-layer depth as well as the base material micro-structure, it is apparent that the target values of the σw and the bending straightening property were both satisfied, and these cases are excellent in bending fatigue characteristics and bending straightening property.

To the contrary, in the cases of Test No. 9 to Test No. 14, the respective chemical compositions of Steel I to Steel N deviate from the conditions specified by the present invention, and thus these cases are poorer in bending fatigue characteristics or bending straightening property.

Specifically, in the case of Test No. 9, the C content of Steel I that is the steel material of the base metal is less than the range specified by the present invention. Consequently, the internal hardness of the Ono-type rotating bending fatigue test specimen is as low as 195 in terms of the HV hardness, and the σw does not satisfy the target value of 800 MPa or more; thus this case is poor in bending fatigue characteristics.

In the case of Test No. 10, the Mn content of Steel J that is the steel material of the base metal is less than the range specified by the present invention. Consequently, the surface-layer hardness of the Ono-type rotating bending fatigue test specimen is as low as 405 in terms of the HV hardness, and the σw does not satisfy the target value of 800 MPa or more; thus this case is poor in bending fatigue characteristics.

In the case of Test No. 11, the Mn content of Steel K that is the steel material of the base metal is more than the range specified by the present invention. Consequently, although the compound-layer depth is as small as 3 μm, the surface-layer hardness of the four-point bending test specimen is as high as 512 in terms of the HV hardness, and the bending straightening property does not satisfy the target value of 22000 μ or more in terms of the read value of the gauge; thus this case is poor in bending straightening property.

In the case of Test No. 12, the Cr content of Steel L that is the steel material of the base metal is more than the range specified by the present invention. Consequently, although the compound-layer depth is as small as 2 μm, the surface-layer hardness of the four-point bending test specimen is as high as 505 in terms of the HV hardness, and the bending straightening property does not satisfy the target value of 22000 μ or more in terms of the read value of the gauge; thus this case is poor in bending straightening property.

In the case of Test No. 13, Fn1 of Steel M, which is the steel material of the base metal, is less than the range specified by the present invention. Consequently, the base material micro-structure becomes a ferrite-pearlite micro-structure, and although the surface-layer hardness in the Ono-type rotating bending fatigue test specimen is as high as 412 in HV hardness, and the internal harness is 210 in HV hardness, the bending fatigue strength σw does not satisfy the target value of 800 MPa or more, thus exhibiting poor bending fatigue characteristics.

In the case of Test No. 14, Fn1 of Steel N, which is the steel material of the base metal, is more than the range specified by the present invention. Consequently, the base material micro-structure becomes a martensite micro-structure, and although the compound layer depth is as low as 1 μm, the surface-layer hardness of the four-point bending test specimen is as high as 542 in terms of HV hardness, and the bending straightening property does not satisfy the target value of 22000 μ or more in terms of the read value of the gauge, thus exhibiting poor bending straightening property.

In the cases of Test No. 15 to Test No. 17, the compound-layer depth of the four-point bending test deviates from the condition specified by the present invention; thus these cases are poor in bending straightening property.

In the case of Test No. 15, although Steel A that is the steel material of the base metal has chemical composition within the range specified by the present invention, the compound-layer depth of the four-point bending test specimen is as high as 12 μm, and the bending straightening property does not satisfy the target value of 22000 μ or more in terms of the read value of the gauge; thus this case is poor in bending straightening property.

In the case of Test No. 16, although Steel B that is the steel material of the base metal has chemical composition within the range specified by the present invention, the compound-layer depth of the four-point bending test specimen is as high as 9 μm, and the bending straightening property does not satisfy the target value of 22000 μ or more in terms of the read value of the gauge; thus this case is poor in bending straightening property.

In the case of Test No. 17, although Steel C that is the steel material of the base metal has chemical composition within the range specified by the present invention, the compound-layer depth of the four-point bending test specimen is as high as 20 μm, and the bending straightening property does not satisfy the target value of 22000 μ or more in terms of the read value of the gauge; thus this case is poor in bending straightening property.

INDUSTRIAL APPLICABILITY

The non-thermal refined nitrocarburized component of the present invention is excellent in bending straightening property after the nitrocarburizing treatment, and has a bending fatigue strength as high as 800 MPa or more in the bending fatigue test; therefore, this non-thermal refined nitrocarburized component is usable as a component, such as a crankshaft, in automobiles, industrial machines, or construction machinery, and this component is capable of attaining reduction in weight and size.

## Claims

1. A non-thermal refined nitrocarburized component, comprising a steel material of a base metal, the steel material having a chemical composition comprising: by mass%,
C: 0.35 to 0.50%;
Si: 0.10 to 0.35%;
Mn: 2.3 to 2.8%;
S: 0.10% or less;
N: 0.0030 to 0.0250%;
Cu: 0 to 1.0%;
Mo: 0 to 0.3%;
Ni: 0 to 0.5%;
Ti: 0 to 0.020%; and
the balance: Fe and impurities, wherein
Fn1 shown by the below described Formula [1] satisfies $3.10 \le Fn1 \le 6.00$, and
the impurities include P: 0.08% or less; Al: 0.05% or less; and Cr: less than 0.20%, and wherein
at a stress concentrated region,
an HV hardness according to JIS Z 2244:2009 at a position of 0.05 mm from a surface is 410 to 480,
an HV hardness according to JIS Z 2244:2009 at a position of 1.0 mm from the surface is 200 or more,
a compound-layer depth is 5μm or less, and
a metal micro-structure of the base metal is a microstructure in which bainite accounts for 80% or more of the base metal micro-structure:

$$Fn1 = (0.316C + 0.122) \times (0.7Si + 1) \times (5.1Mn - 1.12) \times (0.364Ni + 1) \times$$

$$(2.16Cr + 1) \times (3Mo + 1) \ ...[1],$$

where an symbol of an element in Formula [1] indicates a content of the element in steel in mass%.

2. The non-thermal refined nitrocarburized component according to claim 1, wherein
the chemical composition of the steel material of the base metal contains, in mass%, one or more types of elements selected from
Cu: 0.05 to 1.0%, and
Mo: 0.05 to 0.3%.

3. The non-thermal refined nitrocarburized component according to claim 1 or 2, wherein
the chemical composition of the steel material of the base metal contains, in mass%, one or more types of elements selected from
Ni: 0.05 to 0.5%, and
Ti: 0.005 to 0.020%.

## Patentansprüche

1. Nichtthermisch raffinierte nitrocarburierte Komponente, umfassend ein Stahlmaterial eines Grundmetalls, wobei das Stahlmaterial eine chemische Zusammensetzung aufweist, umfassend: in Massen-%,
C: 0,35 bis 0,50 %;
Si: 0,10 bis 0,35 %;
Mn: 2,3 bis 2,8 %;
S: 0,10 % oder weniger;
N: 0,0030 bis 0,0250 %;
Cu: 0 bis 1,0 %;
Mo: 0 bis 0,3 %;
Ni: 0 bis 0,5 %;
Ti: 0 bis 0,020 %; und
der Rest: Fe und Verunreinigungen, wobei
Fn1, gezeigt durch die unten beschriebene Formel [1], $3,10 \le Fn1 \le 6,00$ erfüllt, und

die Verunreinigungen beinhalten P: 0,08 % oder weniger; Al: 0,05 % oder weniger; und Cr: weniger als 0,20 %, und wobei

in einer beanspruchungskonzentrierten Region,
eine HV-Härte gemäß JIS Z 2244:2009 an einer Position von 0,05 mm von einer Oberfläche 410 bis 480 ist,
eine HV-Härte gemäß JIS Z 2244:2009 an einer Position von 1,0 mm von einer Oberfläche 200 oder mehr ist,
eine Tiefe der zusammengesetzten Schicht 5 $\mu$m oder weniger ist, und
eine Metallmikrostruktur des Grundmetalls eine Mikrostruktur ist, in der Bainit 80 % oder mehr der Grundmetall-Mikrostruktur ausmacht:

$$Fn1 = (0,316C + 0,122) \times (0,7Si + 1) \times (5,1Mn - 1,12) \times (0,364Ni + 1) \times (2,16Cr + 1) \times (3Mo + 1) \,...[1],$$

wo ein Symbol jedes Elements in Formel [1] einen Gehalt des Elements in Massen-% anzeigt.

**2.** Nichtthermisch raffinierte nitrocarburierte Komponente nach Anspruch 1, wobei
die chemische Zusammensetzung des Stahlmaterials des Grundmetalls in Massen-% eine oder mehrere Arten von Elementen enthält, ausgewählt aus
Cu: 0,05 bis 1,0 % und
Mo: 0,05 bis 0,3 %.

**3.** Nichtthermisch raffinierte nitrocarburierte Komponente nach Anspruch 1 oder 2, wobei
die chemische Zusammensetzung des Stahlmaterials des Grundmetalls in Massen-% eine oder mehrere Arten von Elementen enthält, ausgewählt aus
Ni: 0,05 bis 0,5 % und
Ti: 0,005 bis 0,020 %.

**Revendications**

**1.** Composant nitrocarburé raffiné non thermique, comprenant un matériau en acier d'un métal de base, le matériau en acier ayant une composition chimique comprenant : en % en masse,
C : 0,35 à 0,50%;
Si : 0,10 à 0,35%;
Mn : 2,3 à 2,8% ;
S : 0,10% ou moins ;
N : 0,0030 à 0,0250% ;
Cu : 0 à 1,0% ;
Mo : 0 à 0,3% ;
Ni : 0 à 0,5% ;
Ti : 0 à 0,020% ; et
le reste : Fe et impuretés, dans lequel
Fnl représenté par la formule [1] décrite ci-dessous satisfait $3,10 \leq Fn1 \leq 6,00$, et les impuretés incluent P : 0,08% ou moins ; Al : 0,05% ou moins; et Cr : moins de 0,20%, et dans lequel
dans une région concentrée en contraintes,
une dureté HV selon JIS Z 2244:2009 à une position de 0,05 mm d'une surface est de 410 à 480,
une dureté HV selon JIS Z 2244:2009 à une position de 1,0 mm de la surface est de 200 ou plus,
une profondeur de couche composée est de 5 $\mu$m ou moins, et
une microstructure métallique du métal de base est une microstructure dans laquelle la bainite représente 80% ou plus de la microstructure du métal de base :

$$Fn1 = (0.316C + 0.122) \times (0.7Si + 1) \times (5.1Mn - 1.12) \times (0.364Ni + 1) \times (2.16Cr + 1) \times (3Mo + 1) \,...[1],$$

dans lequel un symbole d'un élément de la formule [1] indique une teneur en acier de l'élément en % en masse.

2. Composant nitrocarburé raffiné non thermique selon la revendication 1, dans lequel
la composition chimique du matériau en acier du métal de base contient, en % en masse, un ou plusieurs types d'éléments choisis parmi
Cu : 0,05 à 1,0%, et
Mo : 0,05 à 0,3%.

3. Composant nitrocarburé raffiné non thermique selon la revendication 1 ou 2, dans lequel
la composition chimique du matériau en acier du métal de base contient, en % en masse, un ou plusieurs types d'éléments choisis parmi
Ni : 0,05 à 0,5%, et
Ti : 0,005 à 0,020%.

Fig.1

1: PIN
2: JOURNAL
3: COUNTERWEIGHT
4: JOURNAL FILLET SECTION
5: PIN FILLET SECTION

Fig.2

Fig.3

Fig.4

TARGET SURFACE TO BE EXAMINED   R3 NOTCH

Fig.5

NOTCH BOTTOM OF R3

0.05mm

DEPTH DIRECTION

1.0mm

×···EXAMPLES OF HARDNESS MEASURING REGION

Fig.6

NOTCH BOTTOM OF R3

×···EXAMPLES OF OBSERVING POSITION OF COMPOUND LAYER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002226939 A
- JP 2007177309 A
- JP 2012026005 A
- JP 2011042846 A